# EUROPÄISCHE PATENTANMELDUNG

(11) **EP 0 747 414 A2**
(43) Veröffentlichungstag der Anmeldung: **11.12.1996**
(21) Anmeldenummer: 96108731.9
(22) Anmeldetag: 31.05.1996
(51) Int. Cl.: C08G 59/50, C09D 163/00

(54) **Verwendung von 2-Cyaniminotetrahydro-1H-1,3,5-triazinen als Härtungsmittel in wässrigen Beschichtungsmitteln**

(30) Priorität: 08.06.1995 DE 19520853
(71) Anmelder: HOECHST AKTIENGESELLSCHAFT, 65926 Frankfurt am Main (DE)
(72) Erfinder: Pfeil, Armin, Dr., 86916 Kaufering (DE); Petri, Stefan, 65232 Taunusstein (DE); Oberressl, Paul, 65185 Wiesbaden (DE)

(57) **Zusammenfassung**

Wäßrige Beschichtungsmittel enthaltend im Feststoff Massenanteile von
(A) 50 bis 90 % Epoxidharze in Form von wäßrigen Dispersionen oder wasserverdünnbaren Festkörpern oder Flüssigkeiten mit einem Epoxidgruppengehalt von 200 bis 6700 mmol/kg,
(B) 10 bis 50 % wasserlösliche oder in Wasser dispergierbare 2-Cyaniminotetrahydro-1H-1,3,5-triazine,
wobei das Verhältnis der Anzahl der Epoxidgruppen in der Komponente (A) zur Anzahl der Triazinmoleküle in der Komponente (B) zwischen 10:1 und 1:1 und der Festkörper-Massenanteil des Beschichtungsmittels zwischen 20 und 80 % liegt.

## Beschreibung

Die Härtung von Epoxidharzen mit Dicyandiamid hat sich vielfältig bei der Formulierung heißhärtender Beschichtungsmassen und Formkörper bewährt. Im Falle lösemittelfreier Systeme wird z.B. Dicyandiamid als feines Pulver in einem Epoxid-Flüssigharz sorgfältig dispergiert. Das System ist heterogen, was anwendungstechnische Nachteile mit sich bringen kann wie ungenügende bzw. langsame Durchhärtung und hohe Restgehalte an nicht umgesetzten Dicyandiamid. In lösemittelhaltigen Systemen, welche in der Regel eine niedrigere Viskosität besitzen, tendiert das dispergierte Dicyandiamid zudem zum Sedimentieren. An der extrem schlechten Löslichkeit von Dicyandiamid scheiterten viele Versuche, homogene Systeme zu formulieren. Bekannt sind auch pulverförmige Gemische aus Epoxidharz und Dicyandiamid, welche z.B. für die Herstellung von Formkörpern eingesetzt werden können.

Um zu homogenen Beschichtungsmassen zu gelangen, wurden verschiedene Wege versucht, Dicyandiamid selbst oder in Form seiner reaktiven Derivate in Lösung zu bringen.

Für lösemittelfreie Systeme wurden z.B. Addukte von Dicyandiamid mit Epoxidverbindungen oder mit anderen Substanzen beschrieben.

Für lösemittelhaltige, nichtwäßrige Systeme sind viele Möglichkeiten bekannt, Dicyandiamid in Lösung zu bringen; so sind zum Beispiel Methylglykol, Dimethylformamid und N-Methylpyrrolidon geeignete Lösungsmittel.

In der EP-A 0 177 631 werden Lösungen von Dicyandiamid in Mischungen aus niedrigsiedenden Ketonen und Dimethylformamid beschrieben, gegebenenfalls mit niedrigsiedenden Alkoholen, welche zur Formulierung lagerstabiler Epoxidharzlösungen zum Einsatz kommen können.

Wäßrige Beschichtungsmittel gewinnen in letzter Zeit aufgrund ihrer günstigen ökologischen Eigenschaften zunehmend an Bedeutung. Daher liegt es nahe, den Einsatz von Dicyandiamid oder dessen Derivaten in wäßrigen Systemen zu ermöglichen. Die Löslichkeit von Dicyandiamid in Wasser beträgt bei 25°C lediglich 4 %, bei 50°C etwa 12%. Um gut lösliche Härtungsmittel auf der Basis von Dicyandiamid zu erhalten, wurden schon einige Methoden beschrieben:

In der DD-PS 158 329 werden Lösungen von Dicyandiamid in Mischungen aus Äthylglykol oder Methylgylcol, Wasser, Aceton und Dimethylformamid, sowie deren Verwendung als Härter von Epoxidharzen beschrieben. Nachdem aber der Einsatz von Glykoläthern aus gewerbehygienischen Gründen zu vermeiden ist und Niedrigsieder wie Aceton in Einbrennbeschichtungen zu Qualitätsproblemen führen können, ist es sinnvoll, einen anderen Weg einzuschlagen.

In der EP-A 0 567 248 wird ein wäßriges Lösemittelsystem beschrieben, welches Methoxyaceton, Wasser und gegebenenfalls weitere Alkohole, Glykole, Glykoläther enthält, so z.B. lösen sich 10% Dicyandiamid in einem Gemisch aus 15 % Wasser und 85 % Methoxyaceton.

Die so erhaltenen Härtungsmittel enthalten aber sehr viel organische Lösemittel, was aus ökologischen Gründen für die Formulierung wäßriger Beschichtungsmittel nicht in Frage kommt. Zudem ist oft die Verträglichkeit mit einem für wäßrige Beschichtungsmittel besonders geeignetem Epoxidharzsystem, wie z.B. in DE-A 36 43 751 oder DE-A 41 28 487 beschrieben, nicht gegeben. Der hohe Lösemittelgehalt kann zum Beispiel zum Brechen der Harzdispersion führen.

Sinnvoll wäre der Einsatz von Dicyandiamid-Verbindungen, welche gut wasserlöslich sind und bei höheren Temperaturen mit wäßrigen Epoxidharzsystemen aushärten.

In der EP-A 0 522 364 werden Kondensationsprodukte aus Dicyandiamid, Formaldehyd und primären Aminen beschrieben, welche sich in wäßriger Lösung sehr einfach herstellen lassen und als Reinstoff in flüssige Epoxidharze wie z.B. ®Beckopox EP 140 (Bisphenol A-Diglycidyläther, Hoechst AG) eingearbeitet werden können. Diese Mischungen härten in der Hitze zu Massen aus, welche gegenüber mit Dicyandiamid gehärteten Systemen deutlich verbesserte Eigenschaften aufweisen.

Die Anwendung dieser Verbindungen zur Härtung wäßriger Epoxidsysteme wird jedoch nicht beansprucht und geht auch weder aus der Beschreibung noch aus den Beispielen hervor. Überraschenderweise wurde nun gefunden, daß diese 2-Cyaniminotetrahydro-1H-1,3,5-triazine als Härtungsmittel für wäßrige Epoxidharzdispersionen, wie z.B. in DE-A 36 43 751 oder DE-A 41 28 487 beschrieben, hervorragend geeignet sind.

Gegenstand der Erfindung sind wäßrige Beschichtungsmittel, enthaltend im Feststoff Massenanteile von
(A) 50 bis 90 %, bevorzugt 60 bis 85 %, besonders bevorzugt 70 bis 80 % wäßrige oder wasserverdünnbare Epoxidharze mit einem Epoxidgruppengehalt von 200 bis 6700 mmol/kg (Epoxidäquivalentgewicht von 150 bis 5000 g/mol),
(B) 10 bis 50 %, bevorzugt 15 bis 40 %, besonders bevorzugt 20 bis 30 % wasserlösliche oder in Wasser dispergierbare 2-Cyaniminotetrahydro-1H-1,3,5-triazine
und zusätzlich
(C) 0 bis 20 %, bevorzugt 1 bis 18 % der Gesamtmasse des wäßrigen Beschichtungsmittels an üblichen Zusätzen wie Tensiden, organischen Lösungsmitteln, Härtungsbeschleunigern, Füllstoffen, Pigmenten und Additiven,
wobei das Verhältnis der Zahl der Epoxidgruppen in (A) zur Zahl der Triazinmoleküle in (B) zwischen 10 : 1 und 1 : 1, bevorzugt zwischen 7 : 1 und 2 : 1, ganz besonders bevorzugt zwischen 5 : 1 und 3 : 1 liegt, der Massenanteil an organischen Lösemitteln unter 25 %, bevorzugterweise unter 15 %, besonders bevorzugt unter 5 % liegt und der Festkörper-Massenanteil des erfindungsgemäßen Beschichtungsmittels zwischen 20 und 80 %, bevorzugterweise zwischen 40 und 70 % liegt.

Die wasserlöslichen oder in Wasser dispergierbaren 2-Cyaniminotetrahydro-1H-1,3,5-triazine (B) können zwar gemäß EP-A 0 522 364 hergestellt werden; zu bevorzugen ist jedoch die dort nicht beschriebene zwei- oder einstufige Synthese unter Verwendung von Paraformaldehyd anstatt wäßriger Formaldehydlösung, wodurch die Handhabung bedeutend vereinfacht und die Laufzeit deutlich verkürzt wird. Diese bevorzugte Synthesevariante ist somit weiterer Gegenstand der vorliegenden Erfindung.

Das Härtungsmittel (B) kann der Dispersion erst unmittelbar vor Gebrauch zugegeben werden (2-Komponenten-System), oder das Härtungsmittel wird gleich von Anfang an zugesetzt, Harz und Härter werden damit als fertiges lagerstabiles 1-Komponenten-System bereitgestellt. Zusätze gemäß (C) können bei Bedarf und zu jedem Zeitpunkt zugefügt werden.

Bei den Epoxidharzen gemäß (A) handelt es sich um wasserlösliche, wasseremulgierbare oder wasserdispergierbare Polyepoxidverbindungen, welche selbstdispergiert oder fremddispergiert, ionisch oder nichtionisch stabilisiert sein können und als Festharz gerechnet einen Epoxidgruppengehalt von 200 bis 6700, bevorzugt 500 bis 6700; besonders bevorzugt 1000 bis 6700 mmol/kg (ein Epoxidäquivalentgewicht von 150 bis 5000 g/mol, bevorzugt von 150 bis 2000 g/mol, ganz besonders bevorzugt von 150 bis 1000 g/mol) aufweisen.

Die erfindungsgemäßen ionisch stabilisierten Epoxidverbindungen weisen einen Gehalt von 10 bis 5000 mmol/kg an ionischen Gruppen auf. Die ionischen Gruppen können kationisch oder anionisch sein; kationische Gruppen leiten sich beispielsweise von Reaktionsprodukten der Epoxidbausteine mit Aminen ab, die durch Säurezusatz ganz oder teilweise in ionische Gruppen überführt werden können. Anionische Gruppen können bei der Reaktion von Epoxidgruppen mit Hydroxy- oder Aminogruppen von Verbindungen entstehen, die mindestens eines Epoxid-reaktive Gruppe ausgewählt aus Hydroxylgruppen, Aminogruppen und Mercaptangruppen tragen, wobei Hydroxylverbindungen und primäre Amine bevorzugt sind, und mindestens eine Säuregruppe, bevorzugt eine Carbon-, Phosphon- oder Sulfonsäuregruppe. Beispiele geeigneter Verbindungen sind Weinsäure, Dimethylolpropionsäure, Lysin, Ornithin, Taurin und Serin.

Nichtionisch stabilisierte Epoxidverbindungen enthalten beispielsweise Polyoxyalkylenäthersegmente aus Bausteinen von Oxyäthylen- und Oxypropylengruppen sowie deren Mischungen, wobei der Gehalt an diesen nichtionischen hydrophilen Gruppen 0,5 bis 20 g/100 g, bevorzugt 1 bis 15 g/100 g beträgt.

So können z.B. Systeme verwendet werden, wie sie z.B. in DE-A 41 36 943, DE-A 28 00 323, US-A 4,423,201, DE-A 29 34 951, DE-A 30 25 609, US-A 4,446,256, EP-A 0 107 969, EP-A 0 202 765, EP-A 0 157 085, EP-A 0 071 429, GB-A 2,159,521, EP-A 0 217 005, EP-A 0 500 092, DE-A 27 21 822, US-A 4,503,173, EP-A 0 176 192, WO-A 9110695, US-A 4,302,373, EP-A 0 172 460, EP-A 0 508 536, DE-A 39 42 858, EP-A 0469 163, DE-A 26 02 255, EP-A 0 511 620, US-A 4,048,179, JP-A 4-161420, JP-A 5-009431, EP-A 0 512 710, EP-A 0 459 651, EP-A 0 051 483, US-A 5,177,122 und WO-A 8300151 beschrieben worden sind. Es kann sich um Systeme auf Basis epoxyfunktioneller Monomerer handeln, um Polyadditionsprodukte auf Basis von Epichlorhydrin und Polyhydroxyverbindungen, um epoxidierte Polymere usw., welche durch Einbau ionischer oder nichtionischer Gruppen hinreichend hydrophil eingestellt werden und dadurch oder durch Verwendung geeigneter anionischer, kationischer, amphoterer oder nichtionischer Tenside oder oberflächenaktiver Polymere wasserlöslich oder - verdünnbar bzw. -dispergierbar gemacht werden.

Besonders bevorzugt sind wäßrige Epoxidharzsysteme, wie sie in DE-A 36 43 751 oder DE-A 41 28 487 sowie EP-A 0 617 086, EP-A 0 618 245 und EP-A 0 639 593 beschrieben werden, und die durch die Bezugnahme in die Beschreibung aufgenommen werden. Es handelt sich dabei um nichtionisch stabilisierte, lösemittelarme oder gar -freie Epoxidharzdispersionen, welche sich hervorragend für die Herstellung wäßriger Beschichtungsmittel eignen und welche mit den dem Fachmann bekannten Härtern sowohl bei Raumtemperatur als auch in der Wärme gehärtet werden können. Diese Epoxidharzsysteme bestehen aus 35 bis 99 % eines Kondensationsprodukts (AA) aus Massenanteilen von
(AA1) 50 bis 95 % einer oder mehrerer Epoxidverbindung(en) mit mindestens zwei Epoxidgruppen pro Molekül und einem Epoxidgruppengehalt von 500 bis 10 000 mmol/kg (Epoxidäquivalentmasse von 100 bis 2 000 g/mol),
(AA2) 5 bis 50 % eines aromatischen Polyols und
(AA3) 0 bis 25 % modifizierender Verbindungen mit mindestens zwei epoxid-reaktiven Gruppen,
(AB) 1 bis 25 % eines Dispergiermittels, bestehend aus
   (AB1) einem Kondensationsprodukt aus
   (AB1a) einem Polyol mit einer gewichtsmittleren molaren Masse (M_{w}) von 200 bis 20 000 g/mol und
   (AB1b) einer Epoxidverbindung mit durchschnittlich mindestens zwei Epoxidgruppen pro Molekül und einem Epoxidgruppengehalt von 100 bis 10 000 mmol/kg (Epoxidäquivalentmasse von 100 bis 10 000 g/mol), wobei die Mengen an (AB1a) und (AB1b) so gewählt werden, daß das Verhältnis der Anzahl der Hydroxylgruppen zur Anzahl der Epoxidgruppen dieser Komponenten zwischen 1:2 und 1:10 beträgt, und der Epoxidgruppengehalt des Kondensationsproduktes zwischen 100 und 7000 mmol/kg beträgt, und
   (AB2) gegebenenfalls weiteren, vorzugsweise nichtionischen Tensiden;
(AC) 0 bis 20 % eines in dieser Dispersion hergestellten Polymerisats von zur radikalischen Polymerisation bzw. Copolymerisation befähigten äthylenisch ungesättigten Monomeren,
(AD) 0 bis 20 % einer oder mehrerer niedermolekularer, bei Raumtemperatur flüssigen epoxyfunktionellen Verbindungen ausgewählt aus Mono- und Diglycidyläthern von ein- und zweiwertigen Alkoholen und Phenolen mit 2 bis 18 Kohlenstoffatomen, Mono- und Diglycidyläthern von Polyoxyalkylenglykolen mit zahlenmittleren molaren Massen bis zu 1000 g/mol und Mono- und Diglycidylestern von linearen oder verzweigten aliphatischen Mono- und Dicarbonsäuren mit 2 bis 40 Kohlenstoffatomen.

Bei den Triazin-Verbindungen (B), welche selber nicht Gegenstand dieser Erfindung sind, können sämtliche denkbaren und in EP-A 0 522 364 beschriebenen Verbindungen zum Einsatz kommen, bevorzugterweise solche, welche wasserlöslich oder wasserdispergierbar sind. Sie werden hergestellt, indem Dicyandiamid mit Formaldehyd und mono- als auch polyfunktionellen primären Aminen in wäßrigem Medium bei erhöhten Temperaturen umgesetzt wird, wobei sich gegebenenfalls noch eine weitere Reaktionsstufe mit Formaldehyd und einem sekundären Amin anschließen kann. Die so gewonnenen Verbindungen besitzen folgende Struktur 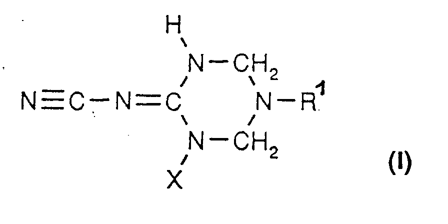 wobei R¹ ein Wasserstoffatom, eine Cyanogruppe, einen primären oder sekundären gegebenenfalls ungesättigten aliphatischen, cycloaliphatischen oder araliphatischen substituierten oder unsubstituierten Kohlenwasserstoffrest mit 1 bis 12 Kohlenstoffatomen und X ein Wasserstoffatom oder eine -CH₂-N(R²)₂-Gruppe bedeutet und R² für einen aliphatischen, cycloaliphatischen oder aromatischen Kohlenwasserstoffrest mit 1 bis 10 Kohlenstoffatomen oder N(R²)₂ für einen stickstoffhaltigen heterocyclischen Rest steht. Das genannte Herstellverfahren ist ebenso wie die Verbindungen selbst nicht Gegenstand der vorliegenden Erfindung. Besonders bevorzugt für die Härtung wäßriger Epoxidsysteme werden solche Verbindungen (I), welche für sich alleine wasserlöslich oder -dispergierbar sind, oder die sich durch Verwendung geeigneter Tenside (C) in Wasser dispergieren lassen oder sich in der Epoxidharzdispersion dispergieren lassen. Ebenfalls geeignet sind die Alkan-poly-2-cyanimino-tetrahydro-1H-1,3,5-triazine, besonders die Alkylen-bis-2-cyanimino-tetrahydro-1H-1,3,5-triazine, der Formel (II) 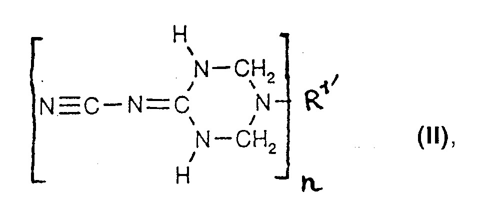 wobei n die Werte 2 bis 4 annehmen kann und R¹' für einen n-wertigen Alkanrest, bevorzugt einen Alkylenrest mit 2 bis 40 Kohlenstoffatomen, für den Rest eines Poly(oxyalkylen)diamins H₂N-R³-(O-R³)ₙ-NH₂ oder für den Rest eines Poly(iminoalkylen)diamins H₂N-R³-(NH-R³)ₘ-NH₂ mit steht, der nach Entfernen jeweils eines Wasserstoffatoms von jeder der primären Aminogruppen verbleibt, wobei R³ für einen linearen oder verzweigten Alkylenrest mit 2 bis 4 Kohlenstoffatomen steht und n und m so gewählt werden, daß die Anzahl der Kohlenstoffatome 4 bis 40 beträgt. Beispielsweise werden dann zur Synthese der Triazine die unter dem Handelsnamen "®Jeffamine" bekannten Polyoxyalkylendiamine, die unter dem Handelsnamen "®Polymin" bekannten Polyäthylenimine und die oligomeren Polyäthylenpolyamine wie Äthylendiamin, Diäthylentriamin, Triäthylentetramin, Tetraäthylenpentamin und Pentaäthylenhexamin eingesetzt.

Weitere geeignete Triazinverbindungen leiten sich von der Formel (I) ab, wenn R¹ einen Rest mit einer Funktionalität größer als 2 bedeutet, der mehr als zwei Triazineinheiten trägt. Die Reste R¹ leiten sich dann beispielsweise von Polyamidoaminen ab, zu deren Herstellung drei- oder mehrfunktionelle Carbonsäuren oder Amine eingesetzt werden.

Die Synthese der o.g. Produkte kann aber auch auf anderem Wege als in EP-A 0 522 364 beschrieben erfolgen. Statt Formaldehydlösung kann Paraformaldehyd verwendet werden, was unter arbeitshygienischen Gesichtspunkten zu bevorzugen ist. Zudem gelingt die Umsetzung zu den gewünschten Produkten auch, wenn die Reaktion mit Paraformaldehyd einstufig statt zweistufig durchgeführt wird, wobei Aldehyd, Dicyandiamid und Wasser als Suspension vorgelegt werden, gegebenenfalls in Gegenwart eines geeigneten Emulgators (C). Auf diese Weise erhält man eine einfachere Reaktionsführung gepaart mit deutlich verkürzter Laufzeit.

Vorzugsweise werden hier Tenside (C) aus hydrophoben Epoxidverbindungen (z.B. Polyäthylenglykoldiglycidyläther) mit hydrophoben Polyolen (z.B. Bisphenol A) oder besonders bevorzugt umgekehrt aus hydrophoben Epoxidverbindungen (z.B. Bisphenol A-Diglycidyläther) mit hydrophilen Polyolen (z.B. Polyäthylenglykol) verwendet. Hier sei auf die Patentschrift DE-A 36 43 751 und die Offenlegungsschrift DE-A 41 28 487 hingewiesen.

Zusätzlich können aber noch weitere Tenside anionischer, kationischer und vorzugsweise nichtionischer Art verwendet werden. In Frage kommen z.B. Alkylbenzolsulfonate, primäre und sekundäre Alkansulfonate, α-Olefinsulfonate, Alkylsulfate, Sulfosuccinate und Alkyläthersulfate als anionische sowie z.B. quaternäre Ammoniumverbindungen als kationische Tenside in Frage, wobei die ionischen Gruppen nicht mit den Epoxidgruppen wechselwirken dürfen. Bevorzugt ist aber die Verwendung nichtionischer Tenside wie äthoxylierte oder äth/propoxylierte Alkohole, Oxoalkohole, Alkylphenole (z.B. Arcopal® der Firma Hoechst), Rizinusöle, Ester, Glycerinstearate, Fettsäuren, Fettamine, Fettalkohole, aber auch z.B. Äthylenoxid-Propylenoxid-Blockcopolymere (z.B. Pluronic® der Firma BASF). Auch die speziell zur Dispergierung von Epoxidharzen beschriebenen Emulgatoren können zum Einsatz kommen, wie z.B. aus US-A 4,423,201 und US-A 4,446,256 (Produkte aus Polyalkylenglykolen, Diisocyanaten und Bisphenolen), EP-A 0 497 404 (Produkte aus Alkoxypolyalkylenglykolen, Anhydriden und Alkylenoxiden, Epoxyalkoholen oder Diglycidyläthern), WO-A 91/10695 (Produkte aus Polyglycidyläthern, bifunkt. Verbindungen und Alkoxypolyalkylenglykolen), EP-A 0 109 173 (Produkte aus Polyoxyalkylenpolyaminen und Epoxidharzen) und DE-A 41 36 943 (Produkte aus Polyalkylenglykolen mit Diisocyanaten und Polyepoxiden).
Als organische Lösungsmittel entsprechend der Komponente (C) kommen insbesondere Glykole, Mono- und Diäther- und -ester von Glykolen mit Alkoholen und Säuren, aliphatische Alkohole mit gegebenenfalls verzweigten Alkylresten von 1 bis 12 Kohlenstoffatomen, cycloaliphatische und araliphatische Alkohole sowie Ester und Ketone in Betracht, wobei diese Lösungsmittel einzeln oder im Gemisch eingesetzt werden können. Als Beispiele seien genannt: Äthylenglykol, Äthylenglykolmonomethyläther, Äthylenglykoldimethyläther, Butylglykol, Methoxypropanol, Äthoxypropanol, Äthanol, 1- und 2-Propanol, Butanol, Cyclohexanol, Benzylalkohol, Essigsäureäthylester, Aceton sowie Methylisobutylketon. Bevorzugt werden Butylglykol, Methoxypropanol, Äthoxypropanol, 2-Propanol und/oder Benzylalkohol eingesetzt.

Als Beschleuniger gemäß (C) eignen sich sämtliche dem Fachmann bekannten Beschleuniger für die Härtung von Epoxidharzen, z.B.: Monuron und Diuron, 3-Hydroxypyridin, N,N-Dimethylbenzylamin, Mannich-Basen polymerer Phenole, Imidazol-Harnstoffe, die verschiedensten Imidazol-Verbindungen, Phosphanderivate und Hexamethylentetramin.

Weiterhin können weitere dem Fachmann bekannte und geeignete Zusätze wie Füllstoffe, Pigmente und Additive zugesetzt werden.

Aufgrund ihrer hervorragenden technischen Eigenschaften, beispielsweise hinsichtlich Haftung, Härte, Korrosionsschutzwirkung, Wasser- und Chemikalienbeständigkeit der erhaltenen Filme, eignen sich die erfindungsgemäßen Beschichtungsmittel zur Herstellung von Überzügen, Zwischenbeschichtungen, Anstrichmaterialien, Formmassen und härtbaren Massen für die unterschiedlichsten Anwendungsgebiete. Beispielsweise können sie zur Herstellung von Schutz- und/oder Dekorbeschichtungen auf den unterschiedlichsten, insbesondere rauhen und porösen Substraten, wie z.B. Holz, mineralischen Untergründen (z.B. Beton und Stein), Glas, Kunststoffen (z.B. Polyäthylen, Polypropylen usw.), Kompositwerkstoffen, Keramik und vorbehandelten oder nicht vorbehandelten Metallen verwendet werden.

Durch ihre günstigen Eigenschaften eignen sich die erfindungsgemäßen Beschichtungsmittel auch hervorragend für die Einschichtlackierung. Die haftende Überzugsschicht kann als solche unverändert bleiben, sie kann aber auch als Zwischenschicht, also als Unterlage für weitere Beschichtungen, dienen, die wiederum aus demselben oder einem anderen üblichen Beschichtungsmaterial bestehen können.

Eine weitere Möglichkeit ist die Verwendung der erfindungsgemäßen Beschichtungsmittel zur Herstellung wasserverdünnbarer Klebstoffe. Auch als Bindemittel für textile, organische und/oder anorganische Materialien sind diese einsetzbar.

Weiterhin sind die erfindungsgemäßen Beschichtungsmittel zur Erzeugung von Elektrolaminaten geeignet.

Im Falle von Beschichtungen erfolgt die Applikation auf das Substrat nach herkömmlichen Methoden, wie beispielsweise Streichen, Spritzen, Tauchen oder Aufwalzen. Die Beschichtungen werden durch Erhitzen auf 80 bis 300 °C für eine zum Aushärten ausreichende Zeit, im allgemeinen 1 bis 60 Minuten, gehärtet.

Bevorzugtes Anwendungsgebiet ist die Beschichtung metallischer Substrate, indem das Beschichtungsmittel in dünner Schicht aufgebracht und eingebrannt wird. Dabei ergeben sich elastische Filme, welche hervorragende mechanische und chemische Beständigkeiten aufweisen. Insbesondere eignen sich die Beschichtungsmittel auch für die Beschichtung von Dosen, besonders bevorzugt für die Außenbeschichtung, da die eingebrannten Filme eine hervorragende Oberflächenqualität verbunden mit Sterilisationsfestigkeit gegenüber Wasser und verdünnten Säuren zeigen.

Die Beschichtungsmittel können in Form von 2-Komponentensystemen vorliegen, d.h. Epoxidkomponente (A) und Härterkomponente (B) getrennt, wobei Zusätze gemäß (C) in geeigneter Art und Weise auf (A) und (B) verteilt zugemischt sein können oder erst beim Mischen der Komponenten (A) und (B) zugegeben werden. Das Beschichtungsmittel kann aber auch als 1-Komponenten-Überzugsmittel vorliegen, und die Zusätze können ganz oder teilweise von Anfang an oder erst kurz vor der Applikation zugegeben werden.

Die folgenden Beispiele sollen den Inhalt der Erfindung verdeutlichen: (Alle Gehaltsangaben in % sind Massenanteile)

### Beispiele:

### 1. Herstellung der 2-Cyaniminotetrahydro-1H-1,3,5-triazine

### 1.1 2-Cyanimino-5-methyltetrahydro-1H-1,3,5-triazin (nicht Gegenstand der Erfindung, gemäß Beispiel 1 von EP-A 0 522 364)

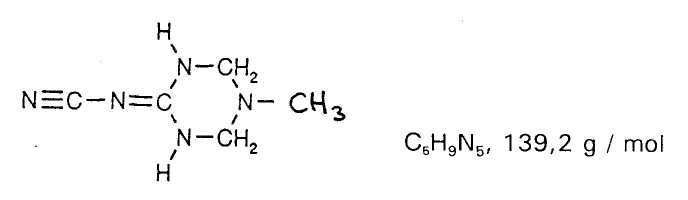

108 g 37 %ige wäßrige Formaldehydlösung wurden in einem Kolben mit 133 g Wasser und 56 g Dicyandiamid gemischt und bei Raumtemperatur 45 min lang gerührt. Zu der nun klaren Lösung erfolgte die Zugabe von 52 g Methylaminlösung (40 % in Wasser), wonach 2 Stunden bei 70°C gerührt wurde. Laufzeit: 3 Stunden.

Die schwach trübe Lösung wurde unter vermindertem Druck eingedampft und getrocknet: 140 g farbloser Feststoff, Aminzahl 432 mg KOH/g.
¹H-NMR (D₂O, 200 MHz) : δ = 2,45 ppm (s, 3 H) und 4,2 ppm (s, 4H).
Die Aminzahl einer 10 %igen wäßrigen Lösung blieb bei 40 °C während 4 Wochen konstant.

### 1.2 2-Cyanimino-5-methyltetrahydro-1H-1,3,5-triazin (alternative Synthese: Paraformaldehyd statt Formaldehyd, zweistufig)

40 g Paraformaldehyd und 201 g Wasser werden bei 95 °C homogenisiert und die milchige Lösung bei 40 °C mit 56 g Dicyandiamid versetzt. Nach 20-minütigem Rühren erfolgt während 10 Minuten tropfenweise Zugabe von 52 g Methylaminlösung (40 % in Wasser), wobei schon nach dem ersten Tropfen der Ansatz klar wird und eine leichte Exothermie auftritt. Zum Ende liegt die Temperatur bei 60 °C, es wird auf 70 °C geheizt und zwei Stunden gehalten.
Laufzeit: **2½** Stunden.
Das ¹H-NMR-Spektrum des Produktes ist identisch zu 1.1.

### 1.3 2-Cyanimino-5-methyltetrahydro-1H-1,3,5-triazin (alternative Synthese: Paraformaldehyd statt Formaldehyd, einstufig)

Es werden die gleichen Mengen wie in 1.2 umgesetzt, wobei Wasser, Dicyandiamid und Paraformaldehyd bei Raumtemperatur vorgelegt werden. Bei der Zugabe des Amins steigt die Temperatur auf 40 °C, der Ansatz wird klar. Es wird auf 70 °C geheizt und nach insgesamt zwei Stunden abgebrochen.
Laufzeit: **2** Stunden.
Das ¹H-NMR-Spektrum des Produktes ist ebenfalls identisch zu 1.1.

### 2. Formulierung eines heißhärtenden 1K-Bindemittels

50,0 g einer lösemittelfreien, wäßrigen Dispersion eines Epoxidharzes für Doseninnenbeschichtungen (55 % Festkörper, Epoxidgruppengehalt des Festharzes 1136 mmol/kg (EV-Wert = 880 g/mol, BECKOPOX® VEM 2132w der Firma Hoechst) wurden mit 7,0 g einer wäßrigen Lösung des Produktes gemäß Beispiel 1.3 (20 % in Wasser/Methoxypropanol 3:1) gemischt. Man erhielt eine stabile Dispersion, welche auch nach 2 Wochen bei 40 °C nicht absetzte. Die Dispersion hatte einen Festkörper-Massenanteil von 51 % und enthielt 2,5 % Methoxypropanol.

### 3. Prüfung als Dosenbeschichtungsmittel

**a)** 50 g der unter 2. erhaltenen Dispersion wurden mit 0,13 g 42,5 %iger Phosphorsäure gemischt und als Klarlack mit einem 25µm-Rakel auf Weißblech aufgezogen. Das Einbrennen erfolgte bei 200 °C / 12 Minuten, wobei ein Trockenfilm von ca. 5 µm erhalten wurde. Dieser zeigte keinerlei Vergilbung und wies insgesamt gute Eigenschaften auf (s.u., Versuch 4).
**b)** Beispiel 2 und 3 wurden mit wechselnden Härtermengen wiederholt, Prüfergebnisse siehe nachstehende Tabelle.

| **Versuch** | **1** | **2** | **3** | **4** | **5** |
|---|---|---|---|---|---|
| VEM 2132w/55%ig | 50,00 g | 50,00 g | 50,00 g | 50,00 g | 150 g |
| Härter/20 %ig | 3,50 g | 5,00 g | 6,00 g | 7,00 g | 50 g |
| H₃PO₄/42,5 %ig | 0,15 g | 0,15 g | 0,15 g | 0,15 g | |

| Weißblech E1 Rakel 25µm 200°C12 Minuten | | | | | |
|---|---|---|---|---|---|
| Verlauf* | 1 | 1 | 1 | 1 | 1 |
| Acetontest (DW) | 3 | 40 | 50 | 100 | 100 |

| Sterilisation in Leitungswasser 2 Bar/30 Minuten | | | | | |
|---|---|---|---|---|---|
| Fläche* | 5 | 2-3 | 2-3 | 2 | 4 |
| Haftung* | 5 | 1 | 1 | 1 | 4 |
| Haftung Sicke* | 5 | 1 | 1 | 1 | 4 |

| Sterilisation in 2 % Milchsäure 129 °C/1 h | | | | | |
|---|---|---|---|---|---|
| Fläche* | 4 | 4 | 5 | 1 | 5 |
| Haftung* | 4 | 5 | 5 | 2 | 5 |
| Haftung Sicke* | 5 | 5 | 5 | 1 | 5 |

| | | | | | |
|---|---|---|---|---|---|
| * Bewertung: 0-5, 0 = Bester Wert | | | | | |

## Patentansprüche

1. Wäßrige Beschichtungsmittel enthaltend im Feststoff Massenanteile von
(A) 50 bis 90 % Epoxidharze in Form von wäßrigen Dispersionen oder wasserverdünnbaren Festkörpern oder Flüssigkeiten mit einem Epoxidgruppengehalt von 200 bis 6700 mmol/kg,
(B) 10 bis 50 % wasserlösliche oder in Wasser dispergierbare 2-Cyaniminotetrahydro-1H-1,3,5-triazine,
wobei das Verhältnis der Anzahl der Epoxidgruppen in der Komponente (A) zur Anzahl der Triazinmoleküle in der Komponente (B) zwischen 10:1 und 1:1 und der Festkörper-Massenanteil des Beschichtungsmittels zwischen 20 und 80 % liegt.

2. Wäßrige Beschichtungsmittel nach Anspruch 1, dadurch gekennzeichnet, daß sie ferner Zusätze ausgewählt aus Tensiden, Härtungsbeschleunigern, Füllstoffen, Pigmenten und Additiven enthalten.

3. Wäßrige Beschichtungsmittel nach Anspruch 1, dadurch gekennzeichnet, daß die 2-Cyanimino-tetrahydro-1H-1,3,5-triazine durch Umsetzung von Paraformaldehyd, Dicyandiamid und primären Aminen ausgewählt aus mono- und polyfunktionellen aliphatischen Aminen hergestellt werden.

4. Wäßrige Beschichtungsmittel nach Anspruch 1, dadurch gekennzeichnet, daß die Epoxidharze der Komponente (A) einen Gehalt von 10 bis 5000 mmol/kg an ionischen Gruppen aufweisen.

5. Wäßrige Beschichtungsmittel nach Anspruch 1, dadurch gekennzeichnet, daß die Epoxidharze der Komponente (A) einen Gehalt von 0,1 bis 20 g / 100 g an hydrophilen nichtionischen Polyoxyalkylenäthergruppen aufweisen, deren Bausteine ausgewählt sind aus Oxyäthylen- und Oxypropylen-Gruppen sowie deren Mischungen.

6. Wäßrige Beschichtungsmittel nach Anspruch 1, dadurch gekennzeichnet, daß die Epoxidharze der Komponente (A) durch Zusatz von 0,5 bis 20 g / 100 g eines Dispergiermittels wasserlöslich oder wasserdispergierbar gemacht werden.

7. Wäßrige Beschichtungsmittel nach Anspruch 1, dadurch gekennzeichnet, daß die Komponenten (A) und (B) erst unmittelbar vor der Verarbeitung gemischt werden.

8. Wäßrige Beschichtungsmittel nach Anspruch 1, dadurch gekennzeichnet, daß die Komponenten (A) und (B) bei der Herstellung gemischt werden und die Mischung lagerstabil ist.

9. Wäßrige Beschichtungsmittel nach Anspruch 1, dadurch gekennzeichnet, daß die Epoxidharzkomponente (A) besteht aus 35 bis 99 % eines Kondensationsprodukts (AA) aus Massenanteilen von
(AA1) 50 bis 95 % einer oder mehrerer Epoxidverbindung(en) mit mindestens zwei Epoxidgruppen pro Molekül und einem Epoxidgruppengehalt von 500 bis 10 000 mmol/kg (Epoxidäquivalentmasse von 100 bis 2 000 g/mol),
(AA2) 5 bis 50 % eines aromatischen Polyols und
(AA3) 0 bis 25 % modifizierender Verbindungen mit mindestens zwei epoxid-reaktiven Gruppen,
(AB) 1 bis 25 % eines Dispergiermittels, bestehend aus
(AB1) einem Kondensationsprodukt aus
(AB1a) einem Polyol mit einer gewichtsmittleren molaren Masse (M_{w}) von 200 bis 20 000 g/mol und
(AB1b) einer Epoxidverbindung mit durchschnittlich mindestens zwei Epoxidgruppen pro Molekül und einem Epoxidgruppengehalt von 100 bis 10 000 mmol/kg (Epoxidäquivalentmasse von 100 bis 10 000 g/mol), wobei die Mengen an (AB1a) und (AB1b) so gewählt werden, daß das Verhältnis der Anzahl der Hydroxylgruppen zur Anzahl der Epoxidgruppen dieser Komponenten zwischen 1:2. und 1:10 beträgt, und der Epoxidgruppengehalt des Kondensationsproduktes zwischen 100 und 7000 mmol/kg beträgt, und
(AB2) gegebenenfalls weiteren, vorzugsweise nichtionischen Tensiden;
(AC) 0 bis 20 % eines in dieser Dispersion hergestellten Polymerisats von zur radikalischen Polymerisation bzw. Copolymerisation befähigten äthylenisch ungesättigten Monomeren,
(AD) 0 bis 20 % einer oder mehrerer niedermolekularer, bei Raumtemperatur flüssigen epoxyfunktionellen Verbindungen ausgewählt aus Mono- und Diglycidyläthern von ein- und zweiwertigen Alkoholen und Phenolen mit 2 bis 18 Kohlenstoffatomen, Mono- und Diglycidyläthern von Polyoxyalkylenglykolen mit zahlenmittleren molaren Massen bis zu 1000 g/mol und Mono- und Diglycidylestern von linearen oder verzweigten aliphatischen Mono- und Dicarbonsäuren mit 2 bis 40 Kohlenstoffatomen.

10. Verwendung von 2-Cyanimino-tetrahydro-1H-1,3,5-triazinen der Formel (I) 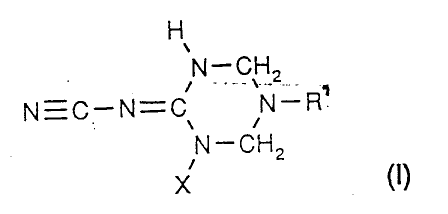 als Härter in wäßrigen Epoxidharzsystemen, wobei
R¹ ausgewählt ist aus den Resten Wasserstoffatom, eine Cyanogruppe, einen primären oder sekundären gegebenenfalls ungesättigten aliphatischen, cycloaliphatischen oder araliphatischen substituierten oder unsubstituierten Kohlenwasserstoffrest mit 1 bis 12 Kohlenstoffatomen, und
X ein Wasserstoffatom oder eine -CH₂-N(R²)₂-Gruppe bedeutet, und
R² für einen aliphatischen, cycloaliphatischen oder aromatischen Kohlenwasserstoffrest mit 1 bis 10 Kohlenstoffatomen oder
N(R²)₂ für einen stickstoffhaltigen heterocyclischen Rest steht.

11. Verwendung von Alkan-poly-2-cyanimino-tetrahydro-1H-1,3,5-triazinen der Formel (II) 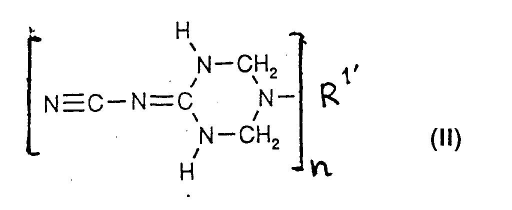 als Härter in wäßrigen Epoxidharzsystemen, wobei n die Werte 2 bis 4 annehmen kann und R¹' für einen n-wertigen Alkanrest mit 2 bis 40 Kohlenstoffatomen, für den Rest eines Poly(oxyalkylen)diamins H₂N-R³-(O-R³)ₙ-NH₂ oder für den Rest eines Poly(iminoalkylen)diamins H₂N-R³-(NH-R³)ₘ-NH₂ steht, der nach Entfernen jeweils eines Wasserstoffatoms von jeder der primären Aminogruppen verbleibt, wobei R³ für einen linearen oder verzweigten Alkylenrest mit 2 bis 4 Kohlenstoffatomen steht und n und m so gewählt werden, daß die Anzahl der Kohlenstoffatome 4 bis 40 beträgt.

12. Verwendung von wäßrigen Beschichtungsmitteln nach Anspruch 1 zu Herstellung von Korrosionsschutzüberzügen auf metallischen Untergründen.

13. Verwendung von wäßrigen Beschichtungsmitteln nach Anspruch 1 zu Herstellung von Klebstoffen.

14. Verwendung von wäßrigen Beschichtungsmitteln nach Anspruch 1 zu Herstellung von Laminaten für die Elektroindustrie.
